# EUROPEAN PATENT SPECIFICATION

(11) **EP 2 441 598 B1**
(45) Date of publication and mention of the grant of the patent: **18.04.2018**
(21) Application number: 11185376.8
(22) Date of filing: 17.10.2011
(51) Int. Cl.: B60C 23/12

(54) **Tire comprising an inflation device and method of manufacturing such a tire**
Reifen mit Füllvorrichtung und Verfahren zur Herstellung eines solchen Reifens
Pneu comportant un dispositif de gonflage et procédé de fabrication d'un tel pneu

(30) Priority: 18.10.2010 US 906174; 18.10.2010 US 906179
(43) Date of publication of application: 18.04.2012
(73) Proprietor: The Goodyear Tire & Rubber Company, Akron, OH 44316-0001 (US)
(72) Inventor: Hinque, Daniel Paul Luc Marie, B-6720 Habay-la-Neuve (BE); Collette, Jean Joseph, B-6700 Arlon (BE); Bormann, René Louis, L-7462 Moesdorf (LU); Di Giacomo Russo, Massimo, L-8339 Olm (LU); Bonnet, Gilles, L-9176 Niederfeulen (LU)
(74) Representative: Kutsch, Bernd

(56) References cited:
- EP-A2- 2 338 703
- WO-A1-2005/012009
- FR-A1- 2 318 747
- US-A- 3 304 981

## Description

### Field of the Invention

The invention relates generally to a tire and more specifically to a tire comprising a device which allows self-inflation of the tire. The invention also relates to a method of manufacturing such a tire.

### Background of the Invention

Normal air diffusion reduces tire pressure within a tire over time. The natural state of tires is under inflated. Accordingly, drivers must repeatedly act to maintain tire pressures or they will see reduced fuel economy, tire life and reduced vehicle braking and handling performance. Tire Pressure Monitoring Systems have been proposed to warn drivers when tire pressure is significantly low. Such systems, however, remain dependant upon the driver taking remedial action when warned to re-inflate a tire to recommended pressure. It is desirable, therefore, to incorporate a self-inflating feature within a tire that will self-inflate the tire in order to compensate for any reduction in tire pressure over time without a need for driver intervention.

US-A-3,304,981 and WO-A-2005/012009 each describe a tire in accordance with the preamble of claim 1.

### Summary of the Invention

The invention relates to a tire in accordance with claim 1 and to a method in accordance with claim 10.

Dependent claims refer to preferred embodiments of the invention.

In one aspect of the invention, the tire includes a tire body having a tire cavity between first and second sidewalls that extend respectively from a pair of annular tire core bead cores to a tire tread region. The tire body is preferably constructed from a pre-cure green tire carcass cured to form a post-cure finished tire body. An air passageway body resides within the tire body and extends between an outward facing tire body surface and the tire cavity, the air passageway body having an enclosed air passageway extending between a hollow body outlet end facing the tire cavity and a hollow inlet end facing outward from the outward facing tire body surface. A tapping device is affixed over one or both of the ends of the air passageway body. The tapping device preferably has an external vent opening and a protrusion member penetrating through a sidewall of the air passageway body to operatively establish an air flow path extending between the air passageway of the air passageway body through the protrusion member and the tapping device vent opening.

In another aspect, the tire may include an inlet tapping device affixed over the hollow body inlet end to operatively direct air flow into the air passageway of the air passageway body and an outlet tapping device affixed over the hollow body outlet end to operatively direct air flow from the air passageway of the air passageway body into the tire cavity. The inlet tapping device and the outlet tapping device are preferably equipped with one or more hollow pin protrusions to attach the devices to respective ends of the air passageway body as well as to establish an air flow path from the air passageway of the air passageway body through the pin protrusions to the respectively attached tapping devices.

According to a further aspect, the air passageway body may be installed pre-cure within the green tire carcass form of the tire body and the inlet tapping device and the outlet tapping device are attached post-cure to the air passageway body.

In one aspect of the invention, the air passageway body may be installed or assembled pre-cure within the pre-cure green tire carcass form of the tire.

In one aspect of the invention, at least one tapping device may be affixed post-cure to the air passageway body within the post-cure tire form.

In one aspect of the invention, the air passageway body may be assembled or installed pre-cure to the pre-cure green tire carcass form of the tire and the inflation device is affixed post-cure to the air passageway body within the post-cure tire form of the tire.

In one preferred aspect of the invention, the at least one tapping device comprises an inlet tapping device affixed over the hollow body inlet end to operatively direct air flow into the air passageway of the air passageway body and an outlet tapping device affixed over the hollow body outlet end to operatively direct air flow from the air passageway of the air passageway body into the tire cavity. The inlet tapping device and the outlet tapping device preferably each have at least one pin protrusion tapering inward toward a tapered end portion and positioned within respective ends of the air passage of the air passageway body, wherein the at least one pin outlet opening within each pin protrusion is located within the respective tapered pin end portion and resides within the respective end of the air passage of the air passageway body.

In one aspect of the invention, the inlet tapping device and the outlet tapping device may be affixed post-cure to the air passageway body. The air passageway body is preferably assembled pre-cure to the pre-cure green tire carcass form of the tire.

In one preferred aspect of the invention, the air passageway body is positioned between first and second tire turnup chafer components of the pre-cure green tire carcass.

In one preferred aspect of the method in accordance with the invention, the method comprises penetrating a preferably hollow protrusion member from the inlet tapping device through a sidewall of the air passageway body to operatively establish an inlet air flow path and/or penetrating a preferably hollow protrusion member from the outlet tapping device through a sidewall of the air passageway body to operatively establish an outlet air flow path.

In one other aspect of the invention, the method may comprise routing the air passageway body through the green tire body along a non-linear path between an outward tire body surface and the inward tire body surface. The non-linear path preferably at least partially surrounds a first tire body bead core.

In one further aspect of the invention, the method of constructing a self-inflating tire may include forming a pre-cure green tire body; positioning an air passageway body within the green tire body to extend between an outward facing green tire body surface and the tire cavity, the air passageway body having an enclosed air passageway extending between a hollow body outlet end facing the tire cavity and a hollow inlet end facing outward from the outward facing green tire body surface; curing the green tire body into a finished cured tire body; affixing one or more tapping device(s) over one or both ends of the air passageway body; and establishing through the tapping device an air flow path extending between the air passageway within the air passageway body and a vent opening within the tapping device.

In another aspect, the method may include penetrating a protrusion member from the tapping device through a sidewall of the air passageway body to operatively establish the air flow path. In a further aspect, the method may include affixing an inlet tapping device over the hollow body inlet end of the air passageway body; directing air flow through a hollow protrusion member of the inlet tapping device into the air passageway of the air passageway body; affixing an outlet tapping device affixed over the hollow body outlet end; directing air flow through a hollow protrusion member of the outlet tapping device from the air passageway of the air passageway body into the tire cavity.

The method according to further aspects of the invention may include routing the air passageway body through the green tire body along a non-linear path between an outward tire body surface and the inward tire body surface. The non-linear path preferably at least partially surrounds a first tire body bead core. The air passageway body is preferably positioned between overlapping green tire components such as first and second tire turn-up chafer components.

### Definitions

"Axial" and "axially" means lines or directions that are parallel to the axis of rotation of the tire.
"Chafer" is a narrow strip of material placed around the outside of a tire bead to protect the cord plies from wearing and cutting against the rim and distribute the flexing above the rim.
"Circumferential" means lines or directions extending along the perimeter of the surface of the annular tread perpendicular to the axial direction.
"Equatorial Centerplane (CP)" means the plane perpendicular to the tire's axis of rotation and passing through the center of the tread.
"Inboard side" means the side of the tire nearest the vehicle when the tire is mounted on a wheel and the wheel is mounted on the vehicle.
"Lateral" means an axial direction.
"Peristaltic" means operating by means of wave-like contractions that propel contained matter, such as air, along tubular pathways.
"Radial" and "radially" means directions radially toward or away from the axis of rotation of the tire.

### Brief Description of the Drawings

The invention will be described by way of example and with reference to the accompanying drawings in which:
FIG. 1 is a perspective view of the self-inflating tire assembly;
FIG. 2 is a perspective view of the air tube body component of the air tube sub-assembly;
FIG. 3 is a top perspective view of the inlet cap component of the air tube sub-assembly;
FIG. 3A is a bottom perspective view of the inlet cap component;
FIG. 3B is a cross sectional view through the inlet cap component taken along the line 3B-3B of FIG. 3A;
FIG. 4 is a top perspective view of an inflation device component of the air tube sub-assembly;
FIG. 4A is a bottom perspective view of the inflation device;
FIG. 5 is an exploded perspective view of the air tube sub-assembly.
FIG. 6 is a cross sectional view through the inlet end of the air tube component;
FIG. 7 is a sectional view through inlet end of the air tube component with the cap component assembled thereto;
FIG. 8A is a partial perspective view of the air tube showing a plurality of a air passage conduits positioned axially along the tube;
FIG. 8B is a partial perspective view of the air tube showing an alternative number of air passage conduits positioned therein;
FIG. 8C is a partial perspective view of the air tube showing an alternative configuration in which a central axial passage through the air tube is unobstructed by the presence of air passage conduits;
FIG. 9A is an enlarged underside perspective view shown in partial section of the bead region of a tire incorporating an externally mounted the air tube sub-assembly;
FIG. 9B is an enlarged topside perspective view shown in partial section of the bead region incorporating the externally mounted air tube sub-assembly;
FIG. 9C is an enlarged underside perspective view shown in partial section of the bead region of a tire in an alternative construction in which the air tube sub-assembly is integrated into the tire construction.
FIG. 9D is an enlarged top side view of the alternative construction of FIG. 9C;
FIG. 10 is an enlarged perspective view of a bead portion of the tire having the alternatively mounted air tube sub-assembly;
FIG. 10A is an enlarged view of the region of the bead area designated 10A of FIG. 10;
FIG. 11 is a perspective view of a tire underside segment mounted to a rim illustrating the outlet end of the air tube sub-assembly mounted to the tire bead region;
FIG. 12 is a perspective view of a tire topside segment mounted to a rim illustrating the inlet end of the air tube sub-assembly mounted to the bead region.
FIG. 13 is a sectional view through a tire having an alternatively configured and routed air tube sub-assembly incorporated therein.

### Detailed Description of the Invention

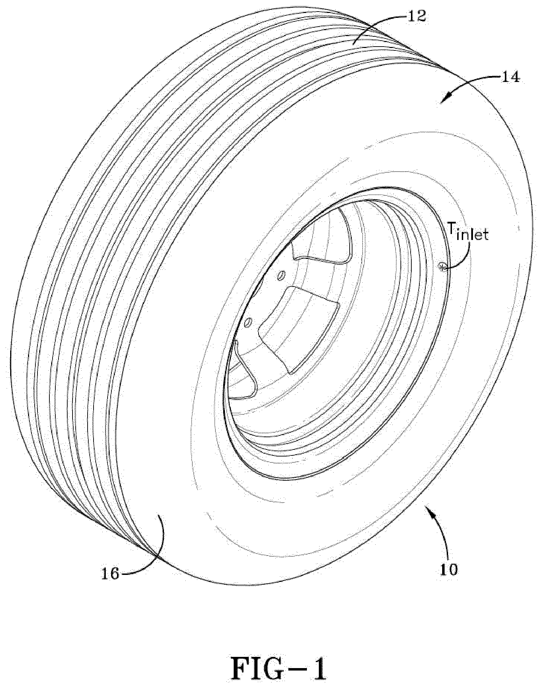

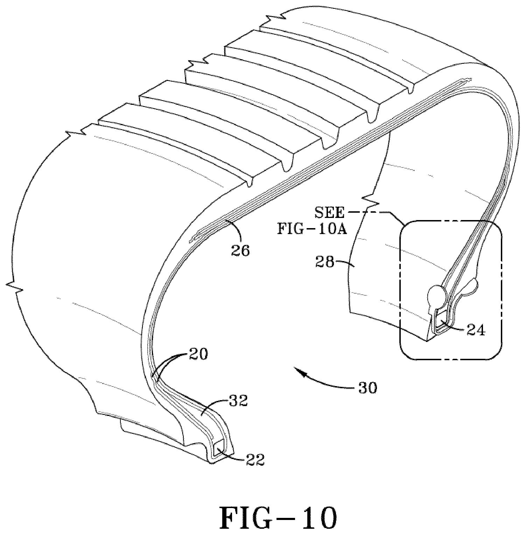

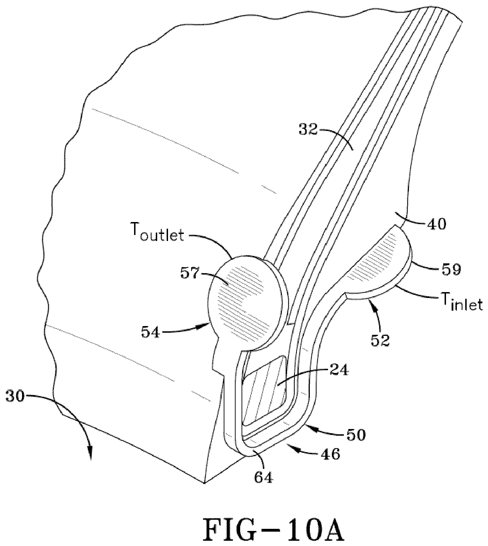

FIGS. 1, 10, and 10A show an example tire 10 for use with the present invention. The tire 10 has a tread 12 and a casing 14. The casing 14 has two sidewalls 16 one or more radial plies 20 extending from, and wrapped about, two annular beads 22, 24 and a belt reinforcement structure 26 located radially between the tread 12 and the ply or plies 20.

The plies 20 and the belt reinforcement structure 26 may be cord reinforced elastomeric material. The cords may be, for example, steel wire filaments and the elastomer may be, for example, a vulcanized rubber material. Similarly, the annular beads 22, 24 may have steel wires wrapped into a bundle forming an inextensible bead core. An innerliner component 28, for example a halobutyl rubber, may form a somewhat air impervious chamber to contain the air pressure within a tire cavity 30 when the tire 10 is inflated.

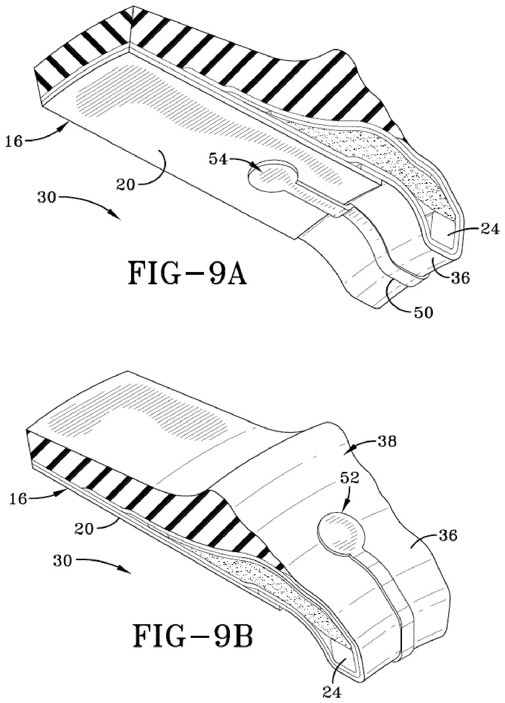

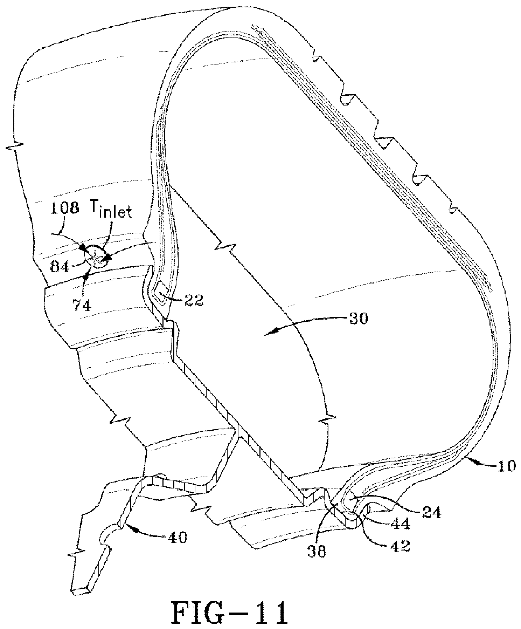

The tire 10 may further include an elastomeric apex 32 radially disposed above each bead 22, 24. A pair of toe guard turnups 34, 36 are provided that form a chafer cured component 38 (FIGS. 9A through D) after the tire has undergone a curing cycle. In general the construction of the tire 10 is conventional and the tire 10 may be configured for consumer, commercial, or specialized vehicle or road applications. As seen in FIGS. 1, 11, and 12, an exemplary cured tire 10 mounts to a rim 40, seated upon rim surface 42 and abutting an outer rim flange 44. So situated, the internal cavity 30 of the tire 10 is enclosed and is intended to contain a recommended volume of air at desired pressure when the tire 10 is fully inflated.

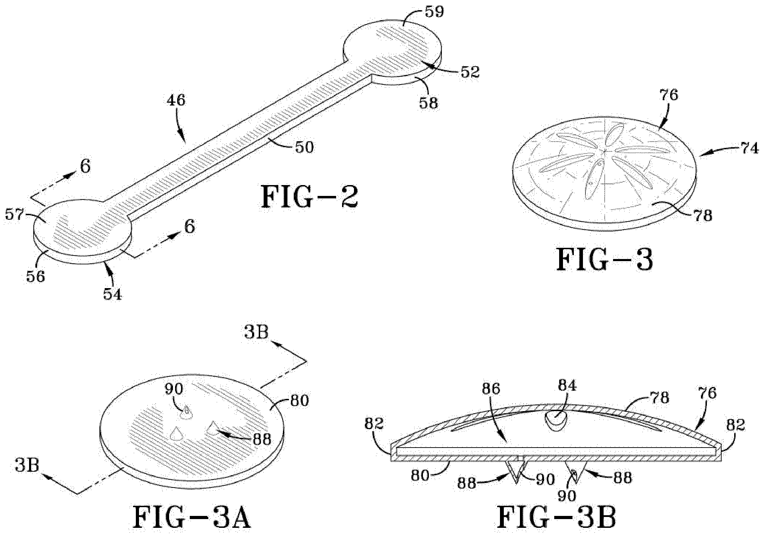

Referring to FIGS. 2, 5, 6, and 7, an air tube body 46 is provided composed of flexible material such as elastomeric or rubber compositions suitable for incorporation into a green tire and capable of maintaining structural integrity during green tire cure. The body 46 is formed having an elongate flat central body section 50 integrally joining at opposite ends to a flattened disk-shaped inlet body end 52 and a flattened disk-shaped outlet body end 54. The body 46 is preferably of unitary construction by conventional molding techniques.

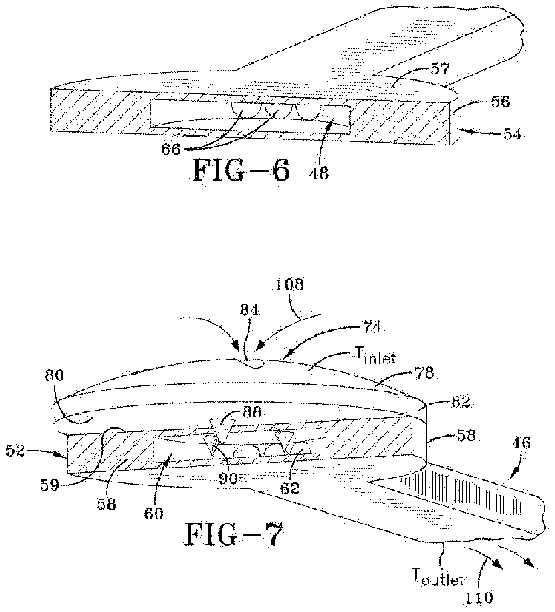

The outlet body end 54 is hollow and of a flat disk-shaped outer configuration having a circular sidewall 56 and a flat outer wall 57. Similarly, the inlet body end 52 at the opposite end of the body central section 50 is likewise of flat disk-shaped outer configuration having a circular sidewall 58 and a flat outer wall 59. As best viewed in FIG 7, the inlet body end 52 is hollow having an enclosed central air chamber 60. The outlet body end 54 as seen in FIG. 6 is likewise hollow having an enclosed a central air chamber 48. The wall thickness and material composition of the inlet body end 52 and the outlet body end 54 are constructed to facilitate pin penetration from a cap component and inflation device respectively as will be explained.

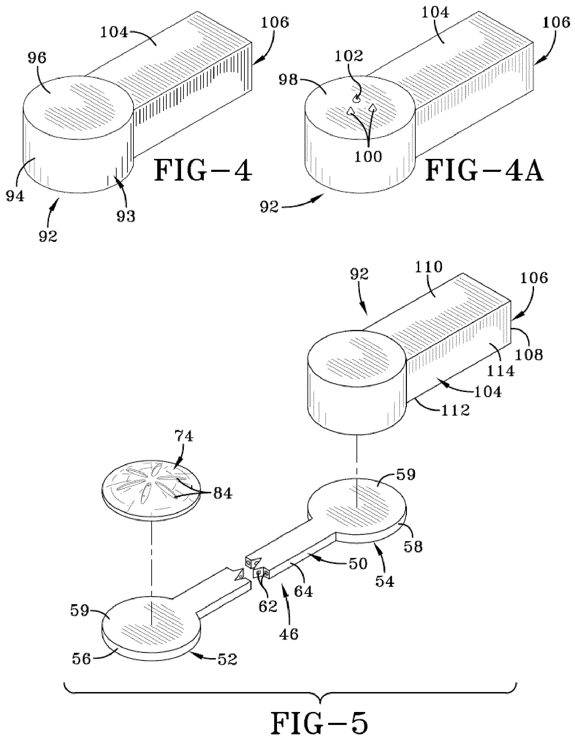

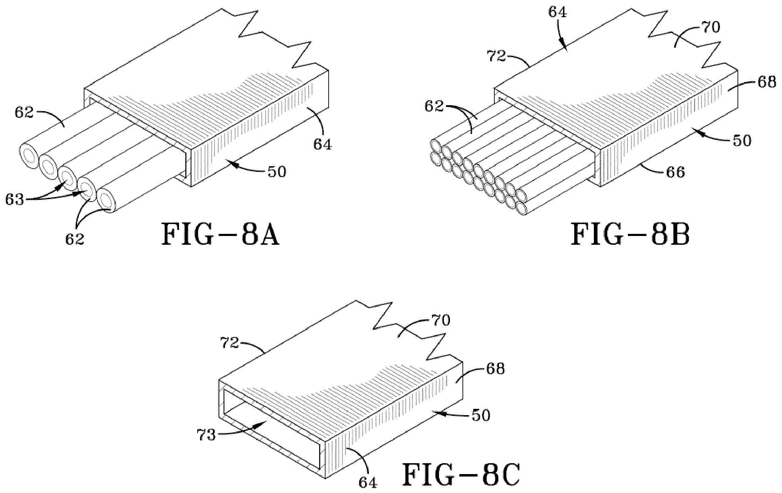

Referring to FIGS. 6, 7, 8A through 8C, the central body section 50 forms a sheath covering 64 defined by sidewalls 66, 68, 70, 72. An open air passageway 73 as seen in FIG. 8C, in one embodiment, extends between the chamber 60 within inlet body end 52 and the chamber 48 within outlet body end 54. The cross-sectional dimension of the air passageway 73 is constructed to allow for a free flow of air between the chambers 48 and 60. Alternatively, multiple tubular air cables 62 may be molded within the central body section 50 as shown in FIG. 5, each having an axial air passageway 63 communicating air flow between the chambers 48, 60. Through appropriate selection of the number and diameter of the air cables 62, the rate of air flow between the chambers 48, 60 may be regulated. For example, FIG. 8A shows an embodiment in which five larger diameter cables 62 are deployed within the central body section 50 and FIG. 8B shows an embodiment utilizing 20 smaller diameter cables 62. Altering the diametric size and number of cables 62 provides flexibility in adjusting the mechanical flex characteristics as well as the air flow characteristics of the air tube body between chambers 48, 60.

Referring to FIGS. 3, 3A, and 3B, a cap component 74 is provided to affix to the inlet body end 52 and allow the flow of air external to a tire into the inlet body end chamber 60. The cap component 74 is constructed of suitable material such as steel or plastic by conventional means into, generally, a dome-shaped cap body 76. The cap body 76 includes a concave top wall 78, a planar bottom wall 80, and an upraised circumferential wall 82 that collectively define an internal cap chamber 86. An array of inlet vents 84 are spaced apart and extend through the concave top wall 78 of the cap body 76. The inlet vents function as air passageways for passing surrounding air through the concave top wall 78 into the cap chamber 86. Projecting from the planar bottom wall 80 is an array of hollow pyramidal pins 88 that taper to a point. Each of the pins 88 has one or more outlet vents or air passageways 90 extending through the body of the pin member to allow air within the cap chamber 86 to evacuate from the cap downward through the pins 88.

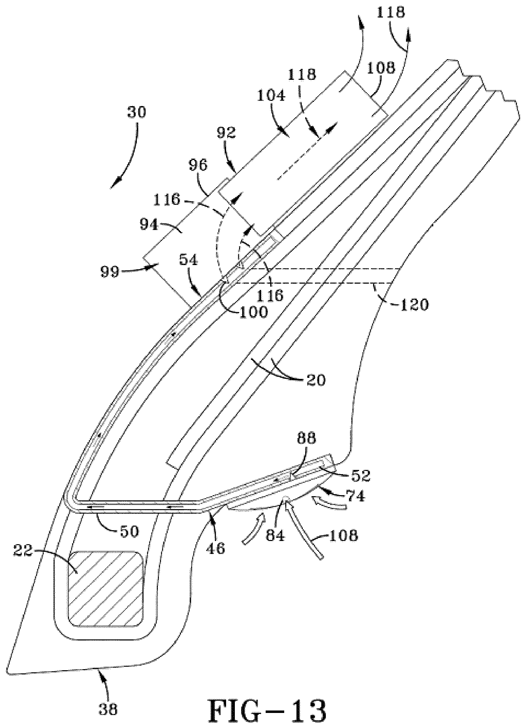

As seen from FIGS. 4, 4A, 5, and 13, the air tube sub-assembly in a post-cure tire includes an inflation device 92 for channeling air from the air tube body 46 into the tire cavity 30. The inflation device 92 has an enclosed cylindrical body 93 defined by body sides 94, a top side 96, and a bottom side 98 that enclose a central chamber 99. Protruding outward from the bottom side 98 is an array of triangular hollow pins 100, each having one or more intake vents extending therethrough to admit air into the central chamber 99. Extending laterally from the cylindrical body 93 is an elongate conduit 104 having a central air passageway 108 extending axially therethrough to an open end. The conduit 104 is generally of flat configuration, rectangular in section and having a planar top wall 110, a planar bottom wall 112, and relatively low profile side walls 114. The direction of the conduit 104 is generally transverse to the direction of air flow through the pins 100 and into the chamber 99. The central air passageway 106 through conduit 104 connects into the chamber 99. A flow of air upward through the pins 100 in the direction 116 enters the chamber 99 and is routed therefrom through the conduit 104 as shown by arrow 116 of FIG. 13 and exits as shown by arrow 118 at conduit end 108. The device 92 may be formed by conventional means by suitable material such as plastic or steel.

Referring to FIGS. 9A through D, 10, and 10A, it will be seen that in the embodiment shown, the air tube body 46 is intended to be incorporated into a green tire during the green tire build process. The air tube body 46 is manufactured as a separate component and, at the appropriate stage of green tire build, integrated between standard tire components so that the inlet body end 52 is situated and faces outward external to the tire, and the outlet body end 54 is situated and faces inward toward the cavity 30 of the tire. In the configuration shown, body 46 is positioned and sandwiched between overlapping two toe guard turnup components 34, 36 although other configurations for integrating the air tube body 46 into a green tire may be employed if so desired. The turnup components 34, 36 will become the chafer component in the cured tire.

The integration of the air tube body 46 between the green tire components 34, 36 is shown in sequence and detail by FIGS. 9A through D. FIG. 9A shows the placement of turnup component 36 around the tire bead 24 and the placement of the air tube body 46 over the component 36. So positioned, the air tube body 46 likewise surrounds the tire bead 24 with the outlet end 54 facing toward the tire cavity 30. The flat construction of the air tube body 46 with the elastomeric and flexible choice of materials in the formation of the body allows the air tube body 46 to resiliently conform to follow the shape of the turnup component 36 and lie flat thereagainst. Embedding the air tube component 36 in such a position as shown does not compromise or alter the position or structure of any of the green tire components assembled prior or subsequent to the positioning of the air tube body 36.

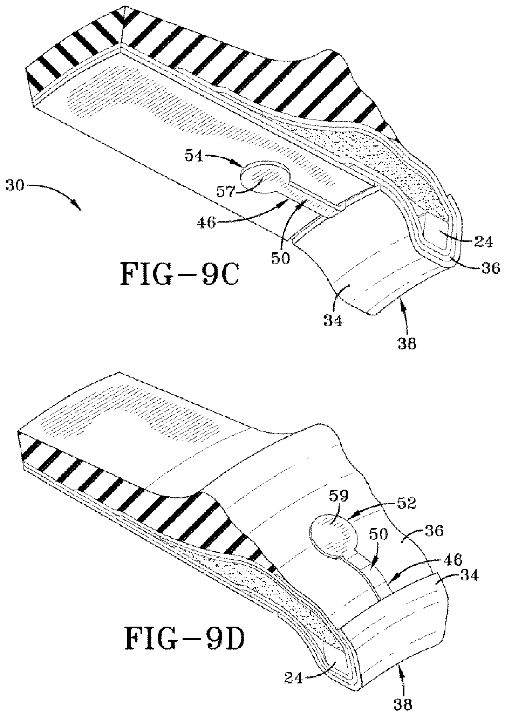

FIG. 9B shows a view of the outside of the green tire and, specifically, the location of the air inlet body end 52 of the air tube body 46. The inlet body end 52 lies flat against the outside of the component 36 and faces outward from the green tire. In FIGS. 9C and 9D, placement of the outer second toe guard turnup component 34 is shown, overlapping air tube body 46 and sandwiching the air tube body 46 between the components 34, 36. The flat, low profile construction of the air tube body 46, particularly the central body segment 50, allows the component 34 to be fitted around the bead core 24 and flat over the inward turnup component 36 in the manner customary to green tire build without compromising the relative positioning or structure of any green tire component. As shown, after the component 34 is positioned over the component 36 and the air tube body 36, the outlet end 54 of the body 36 remains exposed to, accessible from, and facing the tire cavity 30 and the inlet end 52 of the body 36 remains exposed to, accessible from, and facing the outside of the green tire for a purpose explained below.

FIGS. 10 and 10A illustrate a section view through the completed green tire. As best seen in the enlarged sectional view of FIG. 10A, the flat outward surface 57 outlet end 54 faces the interior cavity 30 of the green tire while the flat outward surface 59 of inlet end 52 faces outward from the tire. The central body 50 of the air tube body 46 is encased between the toe guard components 34, 36 and surrounds the tire bead 22. The air tube body 46 within the green tire is enclosed, containing the air passageway through the central body 50 and the chambers 48, 60 within the ends 52, 54. The green tire is then subjected to a curing cycle in conventional manner resulting in a finished tire.

Subsequent to tire cure, as illustrated by FIGS. 5, 6, 7, 11, and 12, the cap component 74 is affixed to the outward surface 59 of the inlet end 52 of air tube body 46. The hollow tapering pins 88 of the cap 74 penetrate through surface 59 until the pin openings 90 enter the inlet end chamber 60. The sectional thickness and material selection of inlet end 52 are designed to facilitate penetration by the cap member pins 88. The pins 88 are constructed of suitably hard material to penetrate through the thickness of the inlet end surface 59 as required. Frictional engagement of the pins 88 through surface 59 acts to retain the cap 74 in place upon the inlet end 52 of the air tube body 46. Secondary retention assist may be included if desired, such as the application of an adhesive between the cap 74 and the inlet surface 59. The surface area and geometry of the underside of the cap generally complements the surface area and geometry of the surface 59 but need not necessarily do so. So positioned, an inlet air path is defined through the vent openings 84 of the cap 74, through the hollow pins 88 of the cap 74, through the openings 90 at the outer tapered ends of the pins 88, and into the inlet end 52 of the air tube body 46 as indicated by directional arrows 108.

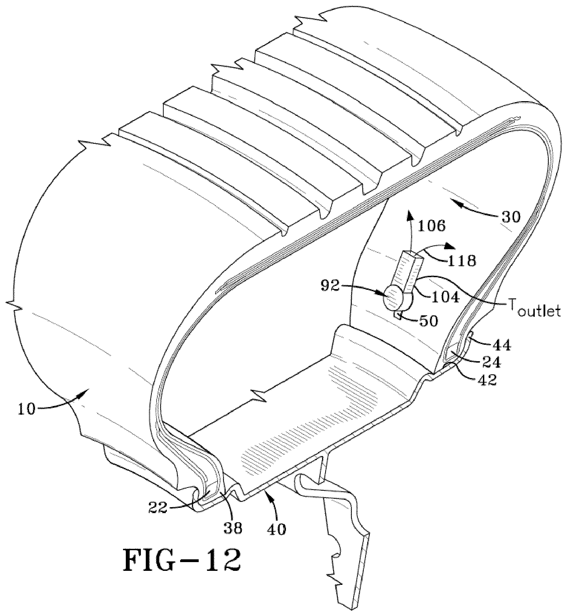

The outlet end 54 of the air tube body 46 is fitted with the inflation device 92 in a post tire-cure operation as shown. The hollow tapering pins 100 of the device 92 penetrate through surface 57 until the pin openings 102 enter the outlet end chamber 48. The sectional thickness and material selection of outlet end 52 are designed to facilitate penetration by the device pins 100. The pins 100 are constructed of suitably hard material to penetrate through the thickness of the outlet end surface 57 as required. Frictional engagement of the pins 100 through surface 57 acts to retain the device 92 in place upon the outlet end 5 of the air tube body 46. Secondary retention assist may be included if desired, such as the application of an adhesive between the device 92 and the outlet end surface 57. The surface area and geometry of the underside 98 of the device 92 generally complements the surface area and geometry of the surface 57 but need not necessarily do so. So positioned, an outlet air path is defined through the passageway 106 of the outlet conduit 104 from the hollow pins 102 of the device 92 which communicate through pin openings 102 with the inner chamber 48 of the outlet end 54 as indicated by directional arrows 118 of FIGS. 12 and 13.

As explained previously, the central body 50 of the air tube body 46 may constitute an open channel between the inlet chamber 60 and the outlet chamber 48. Alternatively, one or more tubular air cables 62 may be embedded within the central body 50 so as to extend between the chambers 48, 60. The number and cross-sectional dimension of the passageways 63 through cables 62 may be selected to enable air to flow between the chambers 48, 60 at a preferred rate. It will be appreciated from FIG. 12 that the outlet conduit 104 of the device 92 extends at a right angle to the path of air moving from the outlet end 54 into the pins 102. Air escaping the outlet conduit 104 is thereby injected into the tire cavity 30 along the inner surface of the sidewall as shown by arrows 118. The orientation of the conduit 104 along the inner surface of the sidewall and into the cavity 30 reduces the extent to which the conduit 104 protrudes into the cavity 30 and thereby minimizes the risk of breakage.

From the foregoing, it will be appreciated that the air passage through the air tube body 46 is entirely enclosed during incorporation of the body within a green tire. The integration of the body 46 within the green tire is done during conventional tire construction techniques and does not require specialized equipment. Moreover, the integration of the body 46 within a green tire establishes a channel that will let air in the tire cavity 30 when needed but which does not compromise the existing tire component configuration and placement or tire attributes such as durability and air containment.

The system provides the advantage of enabling an embedding of an air passage into a tire that does not result in a disruption to the tire building and curing process; does not require any drilling of the cured tire and, therefore, will have a relatively low impact on tire durability; is modular and therefore offers flexibility for use on different tires within product lines.

The shape of the cap 74, the air tube body 46, and the inflation device 92 shown and described previously allows air in from outside the tire and passes the air through the tire by means of the air tube body 46. The cap 74 and the inflation device 92 are not pinched to the enclosed air tube body 46 until after tire cure, whereby preventing the flow of rubber into the air tube body during tire cure. The optional use of discrete tubular cables 62 within the air tube body central body 50 allows for air flow control as well as a more sturdy body 50 construction capable of withstanding the flexing that occurs within a tire during normal use.

FIG. 13 illustrates an alternative embodiment in which the air tube body 46 is not routed around the tire bead. The air tube body 46 in FIG. 13 extends through the tire above the bead 22 and along the inner wall of the tire sidewall facing the cavity 30. As with the embodiment of FIGS. 1 through 12, the inflation device 92 pinches into an outlet end 54 of the air tube body 56 while a cap component 74 penetrates into and attaches to an inlet end. Another position that may be used is shown in phantom in FIG. 13 at numeral 120. At position 120, the air tube body would be extend along a linear path through the tire between the inflation device 92 and the cap 74. In either of the alternative embodiments, a passage through the tire may be drilled once the tire is cured for receipt of the air tube body 46. The advantage gained is a shorter path for the air flow, therefore reducing air flow pressure losses. The alternatives of FIG. 13, however, could create durability issues due to stress concentrations. Moreover, since the size of the hole for receipt of the air tube body may be approximately 5 mm., one or more carcass fibers may be severed. In addition, the off-line drilling after curing may add cost to the manufacturing process.

The tire body is constructed from a pre-cure green tire carcass form cured to a post-cure finished tire body form.

It will be appreciated from the foregoing that, in a general sense, the air tube body 46 (also referred to herein interchangeably as an "air passageway body") resides within the tire body 10 and extends between an outward facing tire body surface such as the outer surface of the chafer 38 and the tire cavity 30. The path of FIGS. 1 through 12 may be employed or alternative paths such as, but not limited to, the alternative paths of FIG. 13. The air passageway body 46 provides the enclosed air passageway (chambers 48, 60 with the air cable(s) 62) which extends between the hollow body outlet end 54 facing the tire cavity 30 and the hollow inlet end 52 facing outward from the outward facing tire body surface. The cap 74 and the inflation device 92 represent tapping devices affixed over one or both of the ends of the air passageway body 46. Each tapping device(s) 74, 92 includes an external vent opening and a protrusion pin member (88, 100) penetrating through a sidewall of the air passageway body 46 to operatively establish an air flow path extending between the air passageway of the air passageway body through the protrusion pin member and through the tapping device vent opening. The "inlet tapping device" (cap 74) is affixed over the hollow body inlet end 52 to operatively direct "outside" air flow into the air passageway of the air passageway body while the "outlet tapping device" (inflation device 92) is affixed over the hollow body outlet end 54 to operatively direct air flow from the air passageway of the air passageway body into the tire cavity 30. The assembly of the air passageway assembly to the tire is done in separate stages, beginning with incorporation of the air passageway tube 46 into a pre-cure green tire carcass form of the tire so that ends of the air passageway tube 46 are at least partially exposed and concluding with the post-cure attachment of cap 74 and/or inflation device 92 to the air tube body 46.

It will be noted from FIGS. 1 through 12 that pre-cure integration of the air passage body 46 into the green tire carcass form of the tire achieves significant advantage. The air tube body 46 is enclosed which keeps the air passageway clear during tire cure. The position and configuration of the air tube body is such that components of the tire are not compromised or structurally affected by the integration of the air passage into the green tire. Thereafter, the cap and inflation device are added if a self inflation capability is desired. The cap and inflation device are affixed by penetrating respective inlet and outlet ends of the air tube body 46 by hollow tapered pins, whereby allowing air to flow into the cap over the inlet end, through the air tube body, and out of the inflation device over the outlet end. The system thus provides an air passage through two hollow ends of a air passageway tube that is pre-installed into a green tire prior to cure. The method of integrating the air channel into the assembly of the tire before curing and only piercing the air passage hollow ends after tire cure serves to keep the air passageway unobstructed and clear. Moreover, the arrangement of tubular cables inside the air tube body central body provides enhanced structural integrity for the passage of air and allows for a control of air flow rate by selecting the number and size of the hollow passageway cables.

## Claims

1. A tire having a tire cavity (30) between first and second sidewalls (16) that extend respectively from a pair of beads (22) to a tire tread region (12), an outward facing tire surface, and an air tube sub-assembly comprising an air passageway body (46) and an inflation device (92), the air passageway body (46) having an enclosed air passageway extending between a hollow body outlet end (54) for facing the tire cavity (30) and a hollow body inlet end (52) for facing outward from the outward facing tire surface, **characterized in that** the air tube sub-assembly further comprises at least one tapping device (74, 92), wherein the at least one tapping device (74, 92) is affixed over at least one of the ends (52, 54) of the air passageway body (46), wherein the at least one tapping device (74, 92) has a vent opening and a protrusion member (88, 100) penetrating through a wall of the air passageway body (46), wherein the inflation device (92) is for channeling air from the air passageway body (46) into the tire cavity (30), and wherein the at least one tapping device (74, 92) provides an air flow path extending between the air passageway within the air passageway body (46) and the vent opening within the tapping device (74, 92).

2. The tire of claim 1 wherein the vent opening and the protrusion member (88, 100) penetrate through a wall, preferably a sidewall, of the air passageway body (46) for allowing to operatively establishing an air flow path extending between the air passageway of the air passageway body (46) through the protrusion member (88, 100) and the vent opening, preferably an external vent opening.

3. The tire of claim 1 or 2 wherein the at least one tapping device (74, 92) comprises an inlet tapping device (74) affixed over the hollow body inlet end (52) to operatively direct air flow into the air passageway of the air passageway body (46), and an outlet tapping device (100) affixed over the hollow body outlet end (54) to operatively direct air flow from the air passageway of the air passageway body (46) into the tire cavity (30).

4. The tire of at least one of the previous claims 1 to 3 wherein the at least one tapping device (74, 92) comprises a cap body (76) affixed over the hollow inlet end (52) of the air passageway body (46), the cap body (76) comprising a cap chamber (86) at least partially defined by an outward facing cap side and an inward facing cap side, at least one vent opening (84) within the outward facing cap side and communicating with the cap chamber (86), and at least one preferably hollow pin protrusion (88) extending from the cap body (76) underside through one sidewall of the hollow inlet end (52) of the air passageway body (46), the pin protrusion (88) having an internal pin air passage communicating with the cap chamber (86) and at least one pin outlet opening positioned within the air passage of the air passageway body (46),

5. The tire of claim 4 wherein the pin protrusion (88) tapers inward toward a tapered end portion positioned within the air passage of the air passageway body (46), wherein the at least one pin outlet opening is located within the tapered end portion of the pin protrusion (88) within the air passage of the air passageway body (46), and, optionally, wherein the tapered end portion of the pin protrusion (88) is configured to operatively penetrate through the one sidewall of the hollow inlet end (52) of the air passageway body (46) to connect the cap body (76) to the air passageway body (46).

6. The tire of at least one of the previous claims 1 to 5 wherein the at least one tapping device (74, 92) comprises an inflation device (92) affixed over the hollow outlet end (54) of the air passageway body (46), the inflation device (92) comprising an internal inflation device chamber (99) at least partially defined by an outward inflation device side and an inward facing inflation device underside, at least one outlet opening (102) within the outward inflation device side and communicating with the inflation device chamber (99), and at least one preferably hollow pin protrusion (100) extending from the inflation device underside through one sidewall of the hollow outlet end (54) of the air passageway body (46), the pin protrusion (100) having an internal pin air passage communicating with the inflation device chamber (99) and at least one pin outlet opening between the pin air passage and the air passage of the air passageway body (46).

7. The tire of claim 6 wherein the inflation device pin protrusion (100) tapers inward toward a tapered end portion positioned within the air passage of the air passageway body (46), and the at least one pin outlet opening is located within the tapered end portion of the pin protrusion within the air passage of the air passageway body (46).

8. The tire of claim 7 wherein the tapered end portion of the pin protrusion (100) is operatively configured to penetrate through the one sidewall of the hollow outlet end (54) of the air passageway body (46) to connect the inflation device (92) to the air passageway body (46).

9. The tire of at least one of the previous claims 1 to 8 wherein the air passageway follows a non-linear path between an outward tire body surface and the inward tire body surface, and/or wherein the air passageway path at least partially surrounds a first tire bead core.

10. A method of manufacturing a tire, the method comprising:
forming a green tire body having a tire cavity (30) between first and second sidewalls (16) that extend respectively from a pair of beads (22) to a tire tread region (12);
positioning or establishing an air passageway body (46) within the green tire body to extend between an outward facing green tire body surface and the tire cavity (30), the air passageway body (46) having an enclosed air passageway extending between a hollow body outlet end (54) of the air passageway body (46) facing the tire cavity (30) and a hollow inlet end (52) of the air passageway body (46) facing outward from the outward facing green tire body surface;
curing the green tire body into a cured tire body with the air passageway body (46) in position within the cured tire body;
affixing at least one tapping device (74, 92) over at least one of the ends (52, 54) of the air passageway body (46); and
establishing through the at least one tapping device (74, 92) an air flow path extending between the air passageway within the air passageway body (46) and a vent opening within the tapping device (74, 92).

11. The method of claim 10 further comprising penetrating a preferably hollow protrusion member (88, 100) from the at least one tapping device (74, 92) through a sidewall of the air passageway body (46) to operatively establish the air flow path.

12. The method of claim 10 or 11 wherein the at least one tapping device (74, 92) is affixed over at least one of the ends (52, 54) of the air passageway body (46) after the tire body has been cured.

13. The method of at least one of the claims 10 to 12 wherein affixing the at least one tapping device (74, 92) over at least one of the ends (52, 54) of the air passageway body (46) comprises:
affixing an inlet tapping device (74) over the hollow body inlet end (52) of the air passageway body (46) for allowing to operatively directing air flow through the inlet tapping device (74) into the air passageway of the air passageway body (46);
affixing an outlet tapping device (100) affixed over the hollow body outlet end (54) of the air passageway body (46) for allowing to operatively directing air flow through the outlet tapping device (100) from the air passageway of the air passageway body (46) into the tire cavity (30).

14. The method of at least one of the claims 10 to 13, further comprising at least one of:
(i) positioning the air passageway body (46) between overlapping green tire body components, preferably turn-up green tire body chafer components;
(ii) positioning the air passageway body (46) within the green tire body with the hollow inlet end of the air passageway body (46) at least partially exposed at the outward facing green tire body surface;
(iii) positioning the air passageway body (46) within the green tire body with the hollow outlet end of the air passageway body (46) at least partially exposed to the tire cavity (30).

## Patentansprüche

1. Reifen, der einen Reifenhohlraum (30) zwischen einer ersten und einer zweiten Seitenwand (16) aufweist, welche Seitenwände sich jeweils von einem Paar von Wülsten (22) bis zu einem Reifenlaufflächenbereich (12) erstrecken, eine auswärts gerichtete Reifenoberfläche, und eine Luftschlauch-Unterbaugruppe, umfassend einen Luftdurchgangskörper (46) und eine Füllvorrichtung (92), wobei der Luftdurchgangskörper (46) einen umschlossenen Luftdurchgang aufweist, der sich zwischen einem hohlen Körperauslassende (54), sodass er zu dem Reifenhohlraum (30) gerichtet ist, und einem hohlen Körpereinlassende (52), sodass er von der auswärts gerichteten Reifenoberfläche auswärts gerichtet ist, erstreckt, **dadurch gekennzeichnet, dass** die Luftschlauch-Unterbaugruppe weiter mindestens eine Entnahmevorrichtung (74, 92) umfasst, wobei die mindestens eine Entnahmevorrichtung (74, 92) über mindestens einem der Enden (52, 54) des Luftdurchgangskörpers (46) angebracht ist, wobei die mindestens eine Entnahmevorrichtung (74,92) eine Lüftungsöffnung und ein vorragendes Element (88, 100), die durch eine Wand des Luftdurchgangskörpers (46) dringen, aufweist, wobei die Füllvorrichtung (92) zum Kanalisieren von Luft aus dem Luftdurchgangskörper (46) in den Reifenhohlraum (30) dient, und wobei die mindestens eine Entnahmevorrichtung (74, 92) einen Luftströmungsweg vorsieht, der sich zwischen dem Luftdurchgang in dem Luftdurchgangskörper (46) und der Lüftungsöffnung in der Entnahmevorrichtung (74, 92) erstreckt.

2. Reifen nach Anspruch 1, wobei die Lüftungsöffnung und das vorragende Element (88, 100) durch eine Wand, bevorzugt eine Seitenwand, des Luftdurchgangskörpers (46) dringen, um das wirksame Erstellen eines Luftströmungswegs zu gestatten, der sich zwischen dem Luftdurchgang des Luftdurchgangskörpers (46) durch das vorragende Element (88, 100) und die Lüftungsöffnung, bevorzugt eine externe Lüftungsöffnung, erstreckt.

3. Reifen nach Anspruch 1 oder 2, wobei die mindestens eine Entnahmevorrichtung (74, 92) eine Einlassentnahmevorrichtung (74), die über dem hohlen Körpereinlassende (52) angebracht ist, um wirksam Luftströmung in den Luftdurchgang des Luftdurchgangskörpers (46) zu lenken, und eine Auslassentnahmevorrichtung (100), die über dem hohlen Körperauslassende (54) angebracht ist, um wirksam Luftströmung von dem Luftdurchgang des Luftdurchgangskörpers (46) in den Reifenhohlraum (30) zu lenken, umfasst.

4. Reifen nach mindestens einem der vorhergehenden Ansprüche 1 bis 3, wobei die mindestens eine Entnahmevorrichtung (74, 92) einen Kappenkörper (76) umfasst, der über dem hohlen Einlassende (52) des Luftdurchgangskörpers (46) angebracht ist, wobei der Kappenkörper (76) eine Kappenkammer (86), die mindestens teilweise durch eine auswärts gerichtete Kappenseite und eine einwärts gerichtete Kappenseite definiert ist, mindestens eine Lüftungsöffnung (84), die sich in der auswärts gerichteten Kappenseite befindet und mit der Kappenkammer (86) kommuniziert, und mindestens einen bevorzugt hohlen Stiftvorsprung (88), der sich von der Unterseite des Kappenkörpers (76) durch eine Seitenwand des hohlen Einlassendes (52) des Luftdurchgangskörpers (46) erstreckt, umfasst, wobei der Stiftvorsprung (88) einen inneren Stiftluftdurchgang, der mit der Kappenkammer (86) kommuniziert, und mindestens eine in dem Luftdurchgang des Luftdurchgangskörpers (46) angeordnete Stiftauslassöffnung aufweist.

5. Reifen nach Anspruch 4, wobei der Stiftvorsprung (88) sich einwärts zu einem verjüngten Endabschnitt verjüngt, der in dem Luftdurchgang des Luftdurchgangskörpers (46) angeordnet ist, wobei die mindestens eine Stiftauslassöffnung sich in dem verjüngten Endabschnitt des Stiftvorsprungs (88) in dem Luftdurchgang des Luftdurchgangskörpers (46) befindet, und wobei optional der verjüngte Endabschnitt des Stiftvorsprungs (88) dazu eingerichtet ist, wirksam durch die eine Seitenwand des hohlen Einlassendes (52) des Luftdurchgangskörpers (46) zu dringen, um den Kappenkörper (76) mit dem Luftdurchgangskörper (46) zu verbinden.

6. Reifen nach mindestens einem der vorhergehenden Ansprüche 1 bis 5, wobei die mindestens eine Entnahmevorrichtung (74, 92) eine Füllvorrichtung (92) umfasst, die über dem hohlen Auslassende (54) des Luftdurchgangskörpers (46) angebracht ist, wobei die Füllvorrichtung (92) eine innere Füllvorrichtungskammer (99) umfasst, die mindestens teilweise definiert ist durch eine auswärts gerichtete Füllvorrichtungsseite und eine einwärts gerichtete Füllvorrichtungsunterseite, mindestens eine Auslassöffnung (102), die sich in der auswärts gerichteten Füllvorrichtungsseite befindet und in Verbindung mit der Füllvorrichtungskammer (99) steht, und mindestens einen bevorzugt hohlen Stiftvorsprung (100), der sich von der Füllvorrichtungsunterseite durch eine Seitenwand des hohlen Auslassendes (54) des Luftdurchgangskörpers (46) erstreckt, wobei der Stiftvorsprung (100) einen inneren Stiftluftdurchgang, der mit der Füllvorrichtungskammer (99) in Verbindung steht, und mindestens eine Stiftauslassöffnung zwischen dem Stiftluftdurchgang und dem Luftdurchgang des Luftdurchgangskörpers (46) aufweist.

7. Reifen nach Anspruch 6, wobei der Fülllvorrichtungsstiftvorsprung (100) sich einwärts zu einem verjüngten Endabschnitt verjüngt, der in dem Luftdurchgang des Luftdurchgangskörpers (46) angeordnet ist, und wobei die mindestens eine Stiftauslassöffnung sich in dem verjüngten Endabschnitt des Stiftvorsprungs in dem Luftdurchgang des Luftdurchgangskörpers (46) befindet.

8. Reifen nach Anspruch 7, wobei der verjüngte Endabschnitt des Stiftvorsprungs (100) wirksam dazu eingerichtet ist, durch die eine Seitenwand des hohlen Auslassendes (54) des Luftdurchgangskörpers (46) zu dringen, um die Füllvorrichtung (92) mit dem Luftdurchgangskörper (46) zu verbinden.

9. Reifen nach mindestens einem der vorhergehenden Ansprüche 1 bis 8, wobei der Luftdurchgang einem nichtlinearen Weg zwischen einer auswärts befindlichen Reifenkörperoberfläche und der einwärts befindlichen Reifenkörperoberfläche folgt, und/oder wobei die Luftdurchgangsweg mindestens teilweise einen ersten Reifenwulstkern umgibt.

10. Verfahren zur Herstellung eines Reifens, wobei das Verfahren umfasst:
Formens eines Reifenrohlingkörpers, der einen Reifenhohlraum (30) zwischen einer ersten und einer zweiten Seitenwand (16) aufweist, welche Seitenwände sich jeweils von einem Paar von Wülsten (22) zu einem Reifenlaufflächenbereich (12) erstrecken;
Anordnen oder Erstellen eines Luftdurchgangskörpers (46) in dem Reifenrohlingkörper, sodass er sich zwischen einer auswärts gerichteten Reifenrohlingkörperoberfläche und dem Reifenhohlraum (30) erstreckt, wobei der Luftdurchgangskörper (46) einen umschlossenen Luftdurchgang aufweist, der sich zwischen einem zu dem Reifenhohlraum (30) gerichteten hohlen Körperauslassende (54) des Luftdurchgangskörpers (46) und einem hohlen Einlassende (52) des Luftdurchgangskörpers (46), das von der auswärts gerichteten Reifenrohlingkörperoberfläche auswärts gerichtet ist, erstreckt;
Vulkanisieren des Reifenrohlingkörpers zu einem vulkanisierten Reifenkörper mit dem Luftdurchgangskörper (46) in Position in dem vulkanisierten Reifenkörper;
Anbringen mindestens einer Entnahmevorrichtung (74, 92) über mindestens einem der Enden (52, 54) des Luftdurchgangskörpers (46); und
Erstellen, durch die mindestens eine Entnahmevorrichtung (74, 92), eines Luftströmungswegs, der sich zwischen dem Luftdurchgang in dem Luftdurchgangskörper (46) und einer Lüftungsöffnung in der Entnahmevorrichtung (74, 92) erstreckt.

11. Verfahren nach Anspruch 10, weiter das Hindurchführen eines bevorzugt hohlen vorragenden Elements (88, 100) von der mindestens einen Entnahmevorrichtung (74, 92) durch eine Seitenwand des Luftdurchgangskörpers (46) zur wirksamen Erstellung des Luftströmungswegs umfassend.

12. Verfahren nach Anspruch 10 oder 11, wobei die mindestens eine Entnahmevorrichtung (74, 92) über mindestens einem der Enden (52, 54) des Luftdurchgangskörpers (46) angebracht wird, nachdem der Reifenkörper vulkanisiert worden ist.

13. Verfahren nach mindestens einem der Ansprüche 10 bis 12, wobei das Anbringen der mindestens einen Entnahmevorrichtung (74, 92) über mindestens einem der Enden (52, 54) des Luftdurchgangskörpers (46) umfasst:
Anbringen einer Einlassentnahmevorrichtung (74) über dem hohlen Körpereinlassende (52) des Luftdurchgangskörpers (46), um das wirksame Leiten von Luftströmung durch die Einlassentnahmevorrichtung (74) in den Luftdurchgang des Luftdurchgangskörpers (46) zu gestatten;
Anbringen einer über dem hohlen Körperauslassende (54) des Luftdurchgangskörpers (46) angebrachten Auslassentnahmevorrichtung (100), um das wirksame Leiten von Luftströmung durch die Auslassentnahmevorrichtung (100) von dem Luftdurchgang des Luftdurchgangskörpers (46) in den Reifenhohlraum (30) zu gestatten.

14. Verfahren nach mindestens einem der Ansprüche 10 bis 13, weiter mindestens eines umfassend von:
(i) Anordnen des Luftdurchgangskörpers (46) zwischen überlappenden Reifenrohlingkörperkomponenten, bevorzugt Reifenrohlingkörper-Wulstschutzumschlagkomponenten;
(ii) Anordnen des Luftdurchgangskörpers (46) in dem Reifenrohlingkörper, wobei das hohle Einlassende des Luftdurchgangskörpers (46) mindestens teilweise an der auswärts gerichteten Reifenrohlingkörperoberfläche freiliegt;
(iii) Anordnen des Luftdurchgangskörpers (46) in dem Reifenrohlingkörper, wobei das hohle Auslassende des Luftdurchgangskörpers (46) mindestens teilweise zu dem Reifenhohlraum (30) hin freiliegt.

## Revendications

1. Bandage pneumatique possédant une cavité de bandage pneumatique (30) entre des premier et deuxième flancs (16) qui s'étendent respectivement à partir d'une paire de talons (22) jusqu'à une zone (12) faisant office de bande de roulement du bandage pneumatique, une surface de bandage pneumatique orientée vers l'extérieur et un sous-assemblage de tubes pour l'air comprenant un corps de passage pour l'air (46) et un dispositif de gonflage (92), le corps de passage pour l'air (46) possédant un passage renfermé pour l'air s'étendant entre une extrémité creuse de sortie de corps (54) pour faire face à la cavité (30) du bandage pneumatique et une extrémité creuse d'entrée de corps (52) pour faire face vers l'extérieur à partir de la surface du bandage pneumatique orientée vers l'extérieur, **caractérisé en ce que** le sous-assemblage de tube pour l'air comprend en outre au moins un dispositif de prélèvement (74, 92) ; dans lequel ledit au moins un dispositif de prélèvement (74, 92) est fixé par-dessus au moins une des extrémités (52, 54) du corps de passage pour l'air (46) ; dans lequel ledit au moins un dispositif de prélèvement (74, 92) possède une ouverture de ventilation et un membre faisant saillie (88, 100) passant à travers une paroi du corps de passage pour l'air (46) ; dans lequel le dispositif de gonflage (92) est destiné à canaliser l'air à partir du corps de passage pour l'air (46) jusque dans la cavité (30) du bandage pneumatique ; et dans lequel ledit au moins un dispositif de prélèvement (74, 92) procure une voie d'écoulement pour l'air s'étendant entre le passage pour l'air au sein du corps de passage pour l'air (46) et l'ouverture de ventilation au sein du dispositif de prélèvement (74, 92).

2. Bandage pneumatique selon la revendication 1, dans lequel l'ouverture de ventilation et le membre faisant saillie (88, 100) traversent une paroi, de préférence une paroi latérale, du corps de passage pour l'air (46), pour permettre l'établissement de manière opérationnelle d'une voie d'écoulement pour l'air s'étendant entre le passage pour l'air du corps de passage pour l'air (46) à travers le membre faisant saillie (88, 100) et une ouverture de ventilation, de préférence une ouverture de ventilation externe.

3. Bandage pneumatique selon la revendication 1 ou 2, dans lequel ledit au moins un dispositif de prélèvement (74, 92) comprend un dispositif de prélèvement d'entrée (74) fixé par-dessus l'extrémité d'entrée creuse (52) du corps pour diriger de manière opérationnelle un écoulement d'air jusque dans le passage pour l'air du corps de passage pour l'air (46) et un dispositif de prélèvement de sortie (100) fixé par-dessus l'extrémité de sortie creuse (54) du corps pour diriger de manière opérationnelle un écoulement d'air à partir du passage pour l'air du corps de passage pour l'air (46) jusque dans la cavité (30) du bandage pneumatique.

4. Bandage pneumatique selon l'une quelconque des revendications 1 à 3, dans lequel ledit au moins un dispositif de prélèvement (74, 92) comprend un corps de capuchon (76) fixé par-dessus l'extrémité d'entrée creuse (52) du corps de passage pour l'air (46), le corps de capuchon (76) comprenant une chambre de capuchon (86) définie au moins en partie par un côté de capuchon orienté vers l'extérieur et par un côté de capuchon orienté vers l'intérieur, au moins une ouverture de ventilation (84) au sein du côté de capuchon orienté vers l'extérieur et communiquant avec la chambre de capuchon (86) et au moins une protrusion en forme d'ergot (88), de préférence creuse, s'étendant à partir du corps de capuchon (76), du côté inférieur, à travers une paroi latérale de l'extrémité d'entrée creuse (52) du corps de passage pour l'air (46), la protrusion (88) en forme d'ergot possédant un passage interne d'ergot pour l'air communiquant avec la chambre de capuchon (86) et au moins une ouverture de sortie d'ergot disposée au sein du passage pour l'air du corps de passage pour l'air (46).

5. Bandage pneumatique selon la revendication 4, dans lequel la protrusion (88) en forme d'ergot se rétrécit vers l'intérieur en direction d'une portion terminale rétrécie disposée au sein du passage pour l'air du corps de passage pour l'air (46), dans lequel ladite au moins une ouverture de sortie d'ergot est disposée au sein de la portion terminale rétrécie de la protrusion (88) en forme d'ergot au sein du passage pour l'air du corps de passage pour l'air (46), et, de manière facultative, dans lequel la portion terminale rétrécie de la protrusion (88) en forme d'ergot est configurée pour traverser de manière opérationnelle ladite paroi latérale de l'extrémité d'entrée creuse (52) du corps de passage pour l'air (46) pour relier le corps de capuchon (76) au corps de passage pour l'air (46).

6. Bandage pneumatique selon l'une quelconque des revendications 1 à 5, dans lequel ledit au moins un dispositif de prélèvement (74, 92) comprend un dispositif de gonflage (92) fixé par-dessus l'extrémité de sortie creuse (54) du corps de passage pour l'air (46), le dispositif de gonflage (92) comprenant une chambre interne de dispositif de gonflage (99) définie au moins en partie par un côté de dispositif de gonflage orienté vers l'extérieur et un côté inférieur du dispositif de gonflage orienté vers l'intérieur, au moins une ouverture de sortie (102) au sein du côté du dispositif de gonflage orienté vers l'extérieur et communiquant avec la chambre (99) du dispositif de gonflage, et au moins une protrusion (100) en forme d'ergot, de préférence creuse, s'étendant à partir du côté inférieur du dispositif de gonflage à travers une paroi latérale de l'extrémité de sortie creuse (54) du corps de passage pour l'air (46), la protrusion (100) en forme d'ergot possédant un passage interne d'ergot pour l'air communiquant avec la chambre (99) du dispositif de gonflage et au moins une ouverture de sortie d'ergot entre le passage d'ergot pour l'air et le passage pour l'air du corps de passage pour l'air (46).

7. Bandage pneumatique selon la revendication 6, dans lequel la protrusion (100) en forme d'ergot du dispositif de gonflage se rétrécit vers l'intérieur en direction d'une portion terminale rétrécie disposée au sein du passage pour l'air du corps de passage pour l'air (46), et ladite au moins une ouverture de sortie d'ergot est disposée au sein de la portion terminale rétrécie de la protrusion en forme d'ergot au sein du passage pour l'air du corps de passage pour l'air (46).

8. Bandage pneumatique selon la revendication 7, dans lequel la portion terminale rétrécie de la protrusion (100) en forme d'ergot est configurée de manière opérationnelle pour traverser ladite paroi latérale de l'extrémité de sortie creuse (54) du corps de passage pour l'air (46) pour relier le dispositif de gonflage (92) au corps de passage pour l'air (46).

9. Bandage pneumatique selon l'une quelconque des revendications 1 à 8, dans lequel le passage pour l'air suit une voie non linéaire entre une surface externe du corps de bandage pneumatique et la surface interne du corps de bandage pneumatique et/ou dans lequel la voie de passage pour l'air entoure au moins en partie une première tringle de talon du bandage pneumatique.

10. Procédé de confection d'un bandage pneumatique, le procédé comprenant le fait de :
former un corps de bandage pneumatique non vulcanisé possédant une cavité (30) de bandage pneumatique entre des premier et deuxième flancs (16) qui s'étendent respectivement à partir d'une paire de talons (22) jusqu'à une zone (12) faisant office de bande de roulement du bandage pneumatique ;
positionner ou établir un corps de passage pour l'air (46) au sein du corps de bandage pneumatique non vulcanisé pour qu'il s'étende entre une surface du corps de bandage pneumatique non vulcanisé, orientée vers l'extérieur et la cavité (30) du bandage pneumatique, le corps de passage pour l'air (46) possédant un passage pour l'air renfermé s'étendant entre une extrémité de sortie creuse (54) du corps de passage pour l'air (46), orientée vers la cavité (30)du bandage pneumatique et une extrémité d'entrée creuse (52) du corps de passage pour l'air (46) orientée vers l'extérieur à partir de la surface du corps de bandage pneumatique non vulcanisé, orientée vers l'extérieur ;
vulcaniser le corps de bandage pneumatique non vulcanisé pour obtenir un corps de bandage pneumatique vulcanisé, le corps de passage pour l'air (46) étant mis en position au sein du corps du bandage pneumatique vulcanisé ;
fixer au moins un dispositif de prélèvement (74, 92) par-dessus au moins une des extrémités (52, 54) du corps de passage pour l'air (46) ; et
établir, à travers ledit au moins un dispositif de prélèvement (74, 92), une voie d'écoulement pour l'air s'étendant entre le passage pour l'air au sein du corps de passage pour l'air (46) et une ouverture de ventilation au sein du dispositif de prélèvement (74, 92).

11. Procédé selon la revendication 10, comprenant en outre le fait de faire en sorte qu'un membre faisant saillie (88, 100) pénètre dans ledit au moins un dispositif de prélèvement (74, 92) en traversant une paroi latérale du corps de passage pour l'air (46) pour établir de manière opérationnelle la voie d'écoulement pour l'air.

12. Procédé selon la revendication 10 ou 11, dans lequel ledit au moins un dispositif de prélèvement (74, 92) est fixé par-dessus au moins une des extrémités (52, 54) du corps de passage pour l'air (46) après la vulcanisation du corps de bandage pneumatique.

13. Procédé selon au moins une des revendications 10 à 12, dans lequel la fixation dudit au moins un dispositif de prélèvement (74, 92) par-dessus au moins une des extrémités (52, 54) du corps de passage pour l'air (46) comprend le fait de :
fixer un dispositif de prélèvement d'entrée (74) par-dessus l'extrémité d'entrée creuse (52) du corps de passage pour l'air (46) pour avoir la possibilité de diriger de manière opérationnelle un écoulement d'air à travers le dispositif de prélèvement d'entrée (74) jusque dans le passage pour l'air du corps de passage pour l'air (46) ;
fixer un dispositif de prélèvement de sortie (100) par-dessus l'extrémité de sortie creuse (54) du corps de passage pour l'air (46) pour avoir la possibilité de diriger de manière opérationnelle un écoulement d'air à travers le dispositif de prélèvement de sortie (100) à partir du passage pour l'air du corps de passage pour l'air (46) jusque dans la cavité (30) du bandage pneumatique.

14. Procédé selon au moins une des revendications 10 à 13, comprenant en outre au moins une des activités ci-après, à savoir :
(i) positionner le corps de passage pour l'air 46 entre des composants du corps de bandage pneumatique non vulcanisé, qui se chevauchent ;
(ii) positionner le corps de passage pour l'air (46) au sein du corps de bandage pneumatique non vulcanisé, l'extrémité d'entrée creuse du corps de passage pour l'air (46) étant exposée au moins en partie à la surface du corps de bandage pneumatique non vulcanisé, orientée vers l'extérieur ;
(iii) positionner le corps de passage pour l'air (46) au sein du corps de bandage pneumatique non vulcanisé, l'extrémité de sortie creuse du corps de passage pour l'air (46) étant exposée au moins en partie à la cavité (30) du bandage pneumatique.
